Europäisches Patentamt

(19) European Patent Office

Office européen des brevets

(11) Veröffentlichungsnummer: **0 187 908**
**B1**

(12) **EUROPÄISCHE PATENTSCHRIFT**

(51) Int. Cl. ⁵: **A 61 G 7/10, B 65 G 21/14**

(45) Veröffentlichungstag der Patentschrifft:
28.02.90

(21) Anmeldenummer: **85113885.9**

(22) Anmeldetag: **31.10.85**

(54) Vorrichtung zur Verlagerung von Gegenständen oder Personen.

(30) Priorität: **17.12.84 DE 3446017**

(43) Veröffentlichungstag der Anmeldung:
**23.07.86 Patentblatt 86/30**

(45) Bekanntmachung des Hinweises auf die Patenterteilung:
**28.02.90 Patentblatt 90/09**

㊽ Bennante Vertragsstaaten:
**DE FR GB IT**

(56) Entgegenhaltungen:
**BE-A-688 786**
**JP-A-59 124 611**
**US-A-3 947 902**
**US-A-4 125 907**

(73) Patentinhaber: **Stierlen-Maquet Aktiengesellschaft**
**Kehler Strasse 31**
**D-7550 Rastatt (DE)**

(72) Erfinder: **Schnelle, Eberhard, Dr.-Ing.**
**Baldenaustrasse 18**
**D-7550 Rastatt (DE)**
Erfinder: **Noth, Siegmar**
**Brunnenstrasse 24**
**D-7502 Malsch-Völkersbach (DE)**

(74) Vertreter: **Schaumburg, Thoenes & Englaender**
**Mauerkircherstrasse 31 Postfach 86 07 48**
**D-8000 München 80 (DE)**

EP 0 187 908 B1

LIBERGRAF, STOCKHOLM 1990

Beschreibung

Die Erfindung betrifft eine Vorrichtung zum Verlagern von Gegenständen oder Personen gemäß dem Oberbegriff des Anspruchs 1.

Aus der DE-A-2 626 638 ist eine Vorrichtung zum Verlagern von Patienten bekannt, bei der die Bandführung für das untere Band von einer weiteren Platte gebildet ist, die mit der Auflageplatte verbunden ist. Das Transportband wird dabei in der Weise bewegt, daß das untere Band als endloses Band von dem Bandantrieb angetrieben wird und durch Reibschluß das Transportband mitnimmt. Es hat sich in der Praxis gezeigt, daß insbesondere bei der Verwendung glatter Materialien für die Bänder der Reibschluß zwischen dem unteren Band und dem oben gelegenen Transportband nicht ausreicht, um auch schwere Gegenstände oder schwere Personen mit dem Transportband auf die Auflageplatte zu ziehen. In diesem Falle rutschte das untere Band durch, ohne daß sich das obere Transportband bewegte.

Aus der oben genannten DE-A-2 626 638 ist es zwar auch schon bekannt, zusätzlich zu dem unteren Band auch das Transportband anzutreiben. Dies erfordert jedoch einen erhöhten Antriebsaufwand, da von dem unterhalb der Bühne befindlichen Bandantrieb eine Antriebsverbindung an den Seiten der Bühne zum Obertrum des Transportbandes geschaffen werden muß. Bei dieser Ausführungsform ist die Bühne durch einen von den Bändern unabhängigen Bühnenantrieb verschiebbar.

Eine Vorrichtung zum Verlagern von Patienten, bei der das Transportband direkt angetrieben wird, ist auch aus der DE-AS-2 606 022 bekannt. Dabei hat die Bühne aber nur einen Rand oder eine Kante, über welche der Patient auf die Auflageplatte hinaufgezogen und wieder von der Auflageplatte hinuntergezogen wird. Dadurch kann die Antriebsvorrichtung im Bereich des anderen Bühnenrandes angeordnet werden. Diese Lösung ist jedoch bei einer Ausführungsform der eingangs genannten Art nicht möglich, bei welcher beispielsweise ein Patient über den einen Bühnenrand auf die Auflageplatte hinaufgezogen und über den anderen Bühnenrand wieder von der Auflageplatte hinuntergeschoben wird.

Ein weiterer Nachteil der bekannten Ausführungsformen besteht darin, daß die Gesamtstärke der Bühne bzw. der beiden Platten mit den Bändern relativ groß ist, da die Stärke der Einzelplatten aus Stabilitätsgründen einen bestimmten Wert nicht unterschreiten kann. Anderenfalls würden sich die Platten unter dem Gewicht der aufzunehmenden Gegenstände oder Personen stark verbiegen, wodurch die Verstellung der Bühne und die Verstellung der Bänder erschwert oder unmöglich gemacht würde. Auf der anderen Seite ist man natürlich bestrebt, die Bühne so dünn wie möglich zu machen, da sie ja beim Aufnehmen einer Person zwischen diese und ihre Unterlage geschoben werden muß.

Aus der JP-A-59 124 611 ist eine Vorrichtung der gattungsgemäßen Art bekannt, bei der sowohl das Transportband als auch das untere Band direkt angetrieben werden.

Der Antrieb des unteren Bandes dient dabei dazu, die Bühne horizontal zu verschieben. Die Umlenkelemente sind von Rollen gebildet, die sich über die gesamte Breite der Auflageplatte erstrecken und unterhalb der Umlenkkanten der Auflageplatte für das obere Band an der Auflageplatte gelagert sind. Dabei werden zwar die Probleme beseitigt, die sich beim Antrieb des Transportbandes bei der Ausführungsform gemäß der DE-A-2 626 638 ergeben. Aber auch diese Vorrichtung weist die Nachteile auf, die sich aus der hohen Dicke der Bühne ergeben. Darüber hinaus hat sich in der Praxis gezeigt, daß bei Vorrichtungen der in der JP-A-59 124 611 beschriebenen Art Probleme beim Verschieben der Bühne auftreten. Da die Auflageplatte möglichst dünn gemacht werden muß, besteht die Gefahr, daß sie sich unter der Last schwerer Gegenstände oder Patienten verformt. Das untere Band hat Reibkontakt mit dem Transportband und wird durch die Umlenkung an den Umlenkelementen erheblich belastet. Es muß zum Verstellen der Bühne große Zugkräfte übertragen. Dazu muß das untere Band stark gespannt sein. Dies führt in der Praxis wegen der über die Bühnenbreite variablen Reibungsverhältnisse dazu, daß sich das untere Band ungleichmäßig dehnt. Infolgedessen kann es geschehen, daß die Bühne schräg gezogen wird und sich dabei verkantet. Die Betriebssicherheit ist hierbei auf Dauer nicht gewährleistet.

Der Erfindung liegt die Aufgabe zugrunde, eine Vorrichtung der gattungsgemäßen Art so auszubilden, daß sie bei möglichst einfachem Aufbau eine bequeme Aufnahme der zu verlagernden Gegenstände oder Personen und eine zuverlässige horizontale Verstellung der Bühne ermöglicht.

Diese Aufgabe wird durch die im kennzeichnenden Teil des Anspruchs 1 angegebenen Merkmale gelöst.

Die zum Umlenken des unteren Bandes dienenden Umlenkleisten können relativ flach gemacht werden, so daß sie fast vollständig in die Auflageplatte eintauchen. Dadurch wird die Gesamtstärke der unter die aufzunehmende Person zu schiebenden Bühne praktisch auf die Stärke der Auflageplatte vermindert. Das Aufnehmen eines Gegenstandes oder einer Person wird erheblich vereinfacht und für einen Patienten schonender. Auch wenn die Stärke der Auflageplatte im Bereich der Vertiefung gering ist, wird die Stabilität der Auflageplatte insgesamt dadurch nicht wesentlich beeinträchtigt. Durch den direkten Bühnenantrieb entfällt die hohe Zugbelastung des unteren Bandes, die sich beim Umlenken um die flachen Umlenkleisten nachteilig auf das Band auswirken könnte.

Eine weitere vorteilhafte Ausführungsform gemäß der Erfindung besteht darin, daß die Leisten an ihren Enden mit senkrecht zur Leistenlängsrichtung gerichteten Schwenkarmen verbunden sind, die jeweils um eine parallel zur Leistenlängsrichtung gerichtete Achse an der Auflageplatte angelenkt sind. Aufgrund dieser Anordnung können die Leisten zusammen mit dem unteren Band von der Auflageplatte bzw. dem Transportband weggeschwenkt werden, so daß alle Bandoberflächen insbesondere das untere Band durch Abwischen gereinigt und desinfiziert werden können, während bei herkömmlichen Ausführungsformen mit einem endlichen unteren Band dieses in der Regel nur teilweise direkt gereinigt werden kann. Dieser Gesichtspunkt ist insbesondere für die Verwendung der erfindungsgemäßen Vorrichtung in Schleusen für das Umbetten von Patienten zwischen einem nichtsterilen Bereich und einem sterilen Bereich von größter Bedeutung.

Bei einer besonders bevorzugten Ausführungsform, bei der die Stützanordnung mindestens eine vertikale Stützsäule und eine an dieser höhenverstellbar gelagerte Trägeranordnung umfaßt, an der die Bühne horizontal verschiebbar gelagert ist, sind nach einem weiteren Merkmal der Erfindung die beweglichen Teile des Verschiebeantriebes für die Bühne und des Höhen-verstellantriebes für die Trägeranordnung zusam-men mit dem Bandantrieb an der Trägeranordnung befestigt. Das heißt, alle beweglichen Antriebsteile der gesamten Vorrichtung sind innerhalb der Trägeranordnung angeordnet und zusammen mit dieser verstellbar. Dadurch ist eine bessere Kapselung der bewegten Teile gegenüber den stationären Teilen der Vorrichtung möglich, wodurch es wiederum erleichtert wird, die Vorrichtung zu reinigen und steril zu halten.

Um zu vermeiden, daß beim Aufnehmen oder Ablegen eines Patienten auf die bzw. von der Bühne Laken, Kleidungsstücke oder dergleichen zwischen die beiden Bänder hineingezogen werden, ist erfindungsgemäß vorgesehen, daß im vorderen oberen Bereich der Leisten und/oder im unteren Bereich der Umlenkkanten der Auflageplatte auf Druck ansprechende Kontaktelemente angeordnet sind, die mit dem Bandantrieb derart verbunden sind, daß sie diesen bei Einwirken eines einen bestimmten Schwellenwert überschreitenden Druckes abschalten. Vorzugsweise sind diese Kontaktelemente als Kontaktleisten ausgebildet, die sich über die gesamte Aufnahmebreite der Bühne erstrecken.

Wird ein Patient in leicht bekleidetem oder unbekleidetem Zustand beispielsweise von einem Krankenbett auf die erfindungsgemäße Umbettvorrichtung gezogen, so kann es für den Patienten unangenehm sein, von dem temperierten Bett auf das kühle Transportband gelegt zu werden. Um diesen Nachteil zu vermeiden, ist gemäß einem weiteren Merkmal der Erfindung in die Auf-lageplatte eine Heizeinrichtung eingebaut. Vor-zugsweise ist die Heizeinrichtung als Flächenheizung direkt an der Unterseite der oberen Begrenzungsplatte der Auflageplatte angeordnet, wobei der Zwischenraum zwischen der Heizeinrichtung und der unteren Begrenzungsplatte der Auflageplatte mit Kunststoff ausgeschäumt ist. Vorzugsweise ist für die Heizeinrichtung eine vom Leitungsnetz galvanisch getrennte Spannungsquelle zur Erzeugung einer Spannung von weniger als 220 Volt, vorzugsweise 60 Volt oder 24 Volt vor-gesehen. Die Heizeinrichtung benötigt normaler-weise keine thermostatische Regelung, wobei die elektrischen Größen so bemessen sind, daß die Heizleistung ca. 0,5 bis 1,5 Watt pro $dm^2$ beheiz-ter Fläche beträgt.

Weitere Merkmale und Vorteile der Erfindung ergeben sich aus den weiteren Unteransprüchen bzw. der folgenden Beschreibung, welche in Verbindung mit den beigefügten Zeichnungen die Er-findung anhand eines Ausführungsbeispieles er-läutert. Es zeigen:

Fig. 1 einen schematischen Vertikalschnitt parallel zur Verschieberichtung der Bühne durch eine in der Wand eingebaute erfindungsgemäße Vorrichtung,

Fig. 2 einen teilweise schematischen Verti-kalschnitt senkrecht zur Verschiebe-richtung der Bühne entlang Linie II - II in Fig. 1,

Fig. 3 einen teilweise schematischen Hori-zontalschnitt entlang Linie III - III in Fig. 2,

Fig. 4 eine schematische Teilansicht des Höhenverstellantriebes der Bühne in Richtung des Pfeiles A in Fig. 2,

Fig. 5 einen schematischen vertikalen Teil-schnitt parallel zur Verschieberich-tung der Bühne durch den vorderen Randbereich der Aufnahmeplatte und einer Leiste und

Fig. 6 bis 9 vereinfachtes chematische Schnittansichten gemäß Fig. 1 zur Erläute-rung der verschiedenen Betriebszus-tände der erfindungsgemäßen Vor-richtung.

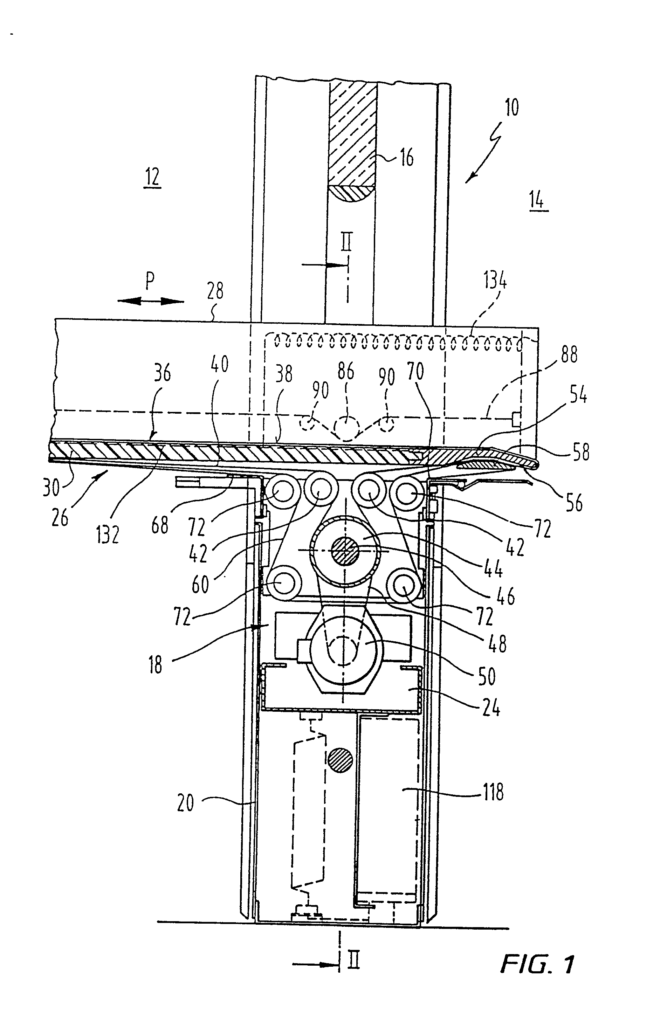

In Fig. 1 erkennt man eine schematisch dargestellte Durchreiche 10 in einer Trennwand zwischen zwei Räumen 12 und 14. Bei den Räumen kann es sich beispielsweise um einen sterilen und einen nichtsterilen Raum in einem Krankenhaus handeln, wobei die Durchreiche 10 für Patienten bestimmt ist. Die Durchreiche kann durch ein vertikal verstellbares Fenster 16 verschlossen werden. Zum Verlagern von Patienten zwischen den Räumen 12 und 14 nach dem Öffnen des Fensters 16 dient die im folgenden nun zu beschreibende Vorrichtung.

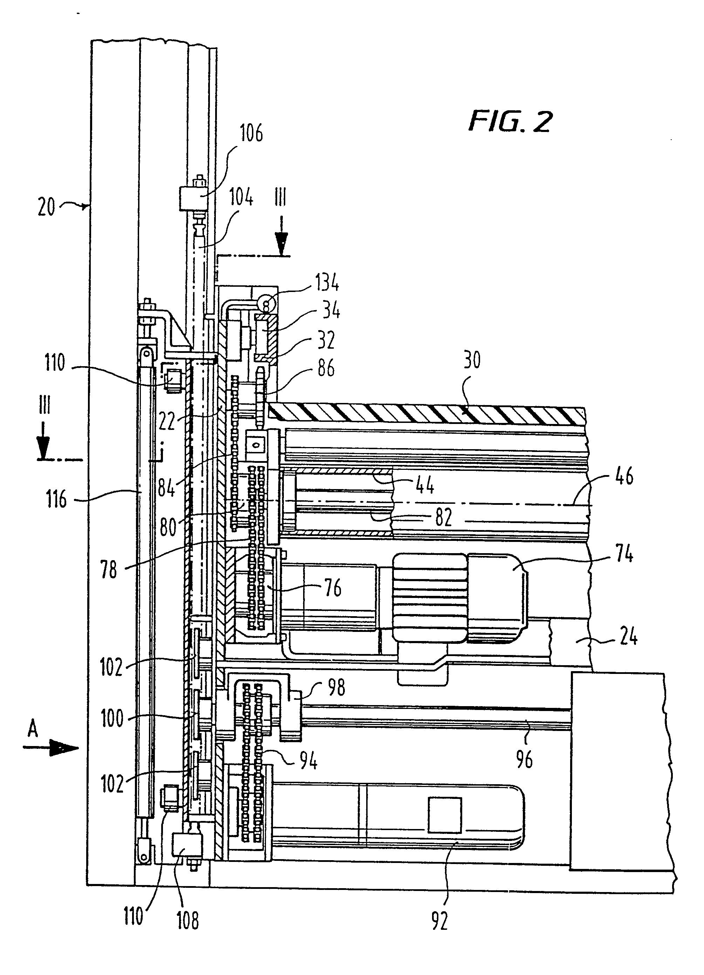

Die Verlagerungsvorrichtung umfaßt eine allgemein mit 18 bezeichnete Trägeranordnung, die an vertikalen Stützen 20 beiderseits der Durchrei-cheöffnung höhenverstellbar gelagert ist, wie dies anhand der Fig. 2 bis 4 weiter unten noch näher beschrieben wird. Die Trägeranordnung 18 umfaßt einen Trägerrahmen mit vertikalen Rahmenseitenteilen 22, die durch einen horizontalen Träger 24 miteinander verbunden sind (Fig. 1 und 2). An dem Trägerrahmen ist eine allgemein mit 26 bezeichnete Bühne in Richtung des Doppelpfeiles P (Fig. 1) verstellbar gelagert.

Die Bühne 26 umfaßt zwei Seitenwangen 28 und zwischen diesen eine Auflageplatte 30. An der der jeweiligen Stützsäule 20 zugekehrten Außenseite der Seitenwangen 28 ist jeweils eine C-förmige Schiene 32 ausgebildet, in die an den Rahmenseitenteilen 22 frei drehbar gelagerte Laufrollen 34 eingreifen, sowie dies in Fig. 2 zu sehen ist. Über die Auflageplatte 30 ist ein endloses Transportband 36 geführt, das mit seinem Obertrum 38 die gesamte Auflageplatte 30 zwischen den Seitenwangen 28 bedeckt und mit seinem Untertrum 40 über Umlenkwalzen 42 um eine Antriebswalze 44 geführt ist, so daß es diese auf dem größten Teil ihres Umfanges umschlingt. Die Antriebswalze 44 ist mit zur Fensterebene 16 paralleler Achse 46 an den Rahmenseitenteilen 22 drehbar gelagert und über eine Antriebskette 48 durch einen Motor 50 in der Trägeranordnung 18 in beiden Drehrichtungen antreibbar.

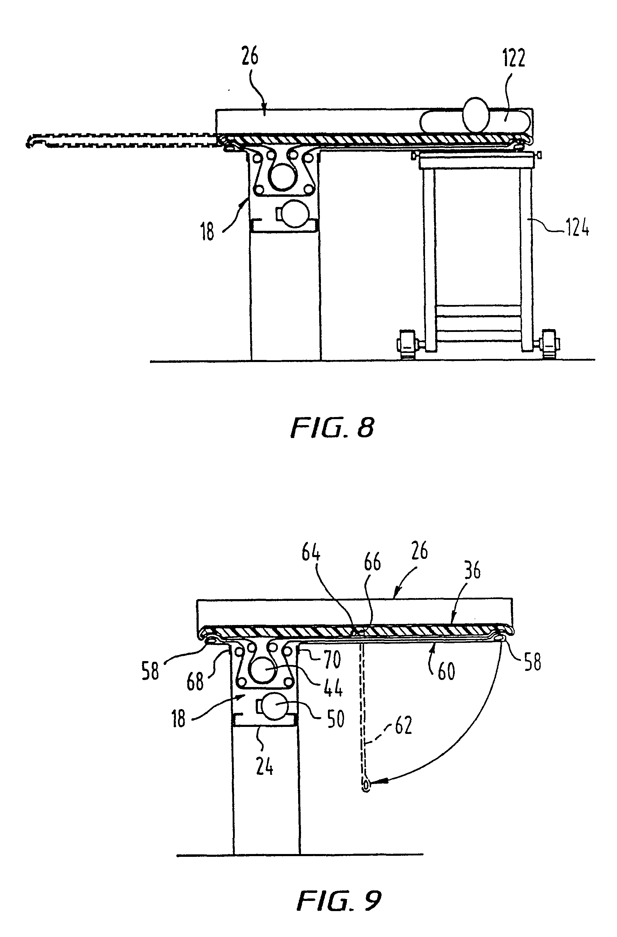

Die Auflageplatte 30 ist von einem Metallrahmen 54 umschlossen, dessen senkrecht zur Verschieberichtung P der Bühne 22 verlaufende Längsprofile an ihrer Unterseite jeweils eine parallel zu ihnen verlaufende Vertiefung 56 aufweisen, in welche eine Umlenkleiste 58 für ein unteres Band 60 eintaucht. Die Umlenkleiste 58 ist jeweils an ihren Längsenden mit einem Schwenkarm 62 verbunden, der in der Fig. 9 gestrichelt dargestellt ist.

Die Schwenkarme 62 sind annähernd in der Mitte der Auflageplatte 30 um eine zur Achse 46 der Antriebswalze 44 parallele Achse 64 bzw. 66 schwenkbar angelenkt, so daß die aus den Schwenkarmen 62 und der jeweiligen Umlenkleiste 58 bestehenden Rahmen zwischen der in Fig. 9 durch ausgezogene Linien wiedergegebenen oberen Stellung und der durch gestrichelte Linien wiedergegebenen unteren Stellung verschwenkt werden können. Das untere endliche Band 60 ist mit seinen beiden Enden 68 und 70 an dem Trägerrahmen befestigt und mit seinem Obertrum mittels Umlenkwalzen 72, 72 unterhalb der Antriebswalze 44 durch die Trägeranordnung 18 hindurchgeführt. Das untere Band 50 kann also nicht als Ganzes bewegt werden. Eine Relativbewegung zu den Umlenkleisten 58 erfolgt aber bei einer Horizontalverschiebung der Bühne 30 in Richtung des Doppelpfeiles P. Wie man insbesondere in Fig. 1 erkennt, ist die Stärke oder Dicke des zwischen i den Seitenwangen 28 liegenden Bühnenabschnittes praktisch gleich der Stärke der Auflageplatte 30, während bei herkömmlichen Vorrichtungen der gattungsgemäßen Art dieser Abschnitt die doppelte Stärke hat, da zwei Platten zur Führung der beiden Bänder verwendet werden.

Die Verschiebung der Bühne 26 in Richtung des Doppelpfeiles P erfolgt mit Hilfe eines in der Blickrichtung der Fig. 1 hinter dem Motor 50 liegenden weiteren Antriebsmotors 74, der an dem Rahmenseitenteil 22 angeflanscht ist (Fig. 2). Seine Ausgangswelle treibt über ein Zahnrad 76 und eine Antriebskette 78 ein Zahnrad 80, das auf einer koaxial zur Antriebswalze 44 gelagerten Welle 82 sitzt und über eine Antriebskette 84 ein an dem Rahmenseitenteil 22 frei drehbar gelagertes Zahnrad 86 antreibt. Dieses steht mit einer zwischen den Längsenden der Seitenwangen 28 eingespannten, in Fig. 1 gestrichelt dargestellten Zugkette 88 in Eingriff, wobei an dem Rahmenseitenteil frei drehbar gelagerte Spannräder 90 dafür sorgen, daß dieser Eingriff erhalten bleibt. Wird das Kettenzahnrad 86 gedreht, so bewegt sich die Bühne 26 entsprechend der Drehrichtung des Kettenzahnrades 86 in Richtung des Doppelpfeiles P.

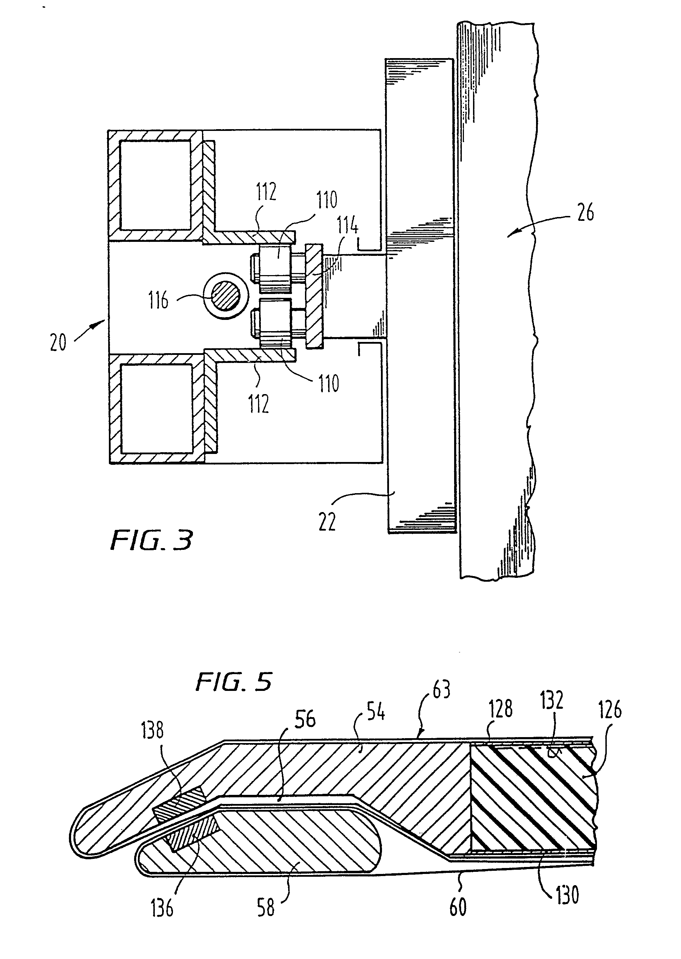

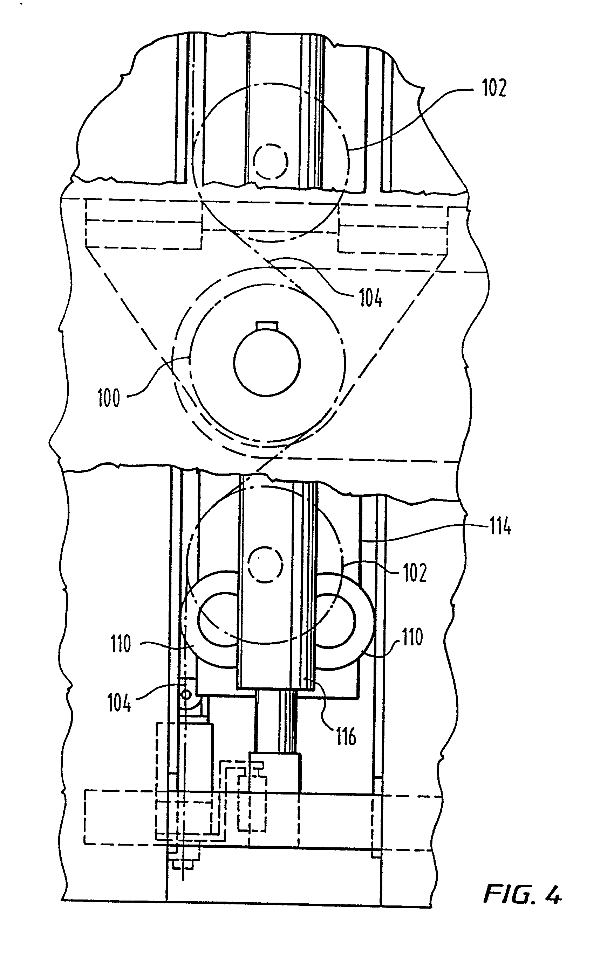

Die Höhenverstellung der Trägeranordnung 18 zusammen mit der Bühne 26 erfolgt mittels eines Höhenverstellantriebes, der nun anhand der Fig. 2, 3 und 4 erläutert werden soll. Der Höhenverstellantrieb umfaßt einen an einem Rahmenseitenteil 22 angeflanschten Antriebsmotor 92, der über eine Antriebskette 94 eine parallel zu der Antriebswalze 44 gerichtete Welle 96 antreibt, die in an der Unterseite des Trägers 24 befestigten Lagern 98 gelagert ist und an ihren freien Enden jeweils ein Kettenzahnrad 100 trägt. Oberhalb und unterhalb des Kettenzahnrades 100 ist an der Außenseite des Rahmenseitenteiles 22 jeweils ein Kettenzahnrad 102 frei drehbar gelagert. Diese Kettenzahnräder 102 und 100 stehen mit einer stationären vertikalen Kette 104 in Eingriff, so wie dies in Fig. 4 dargestellt ist. Die Kette 104 ist zwischen Spannelementen 106 und 108 gespannt, die an der Stützsäule 20 befestigt sind. Wird das Kettenzahnrad 100 von dem Antriebsmotor 92 her angetrieben, so bewegt sich die gesamte Trägeranordnung einschließlich der Bühne und sämtlicher Antriebe nach oben oder unten, wobei sie mittels Laufrollen 110 in der in der Fig. 3 ersichtlichen Weise an Stützflächen 112 der Stützsäulen 20 geführt wird. Die Laufrollen 110 sind an einer mit dem Trägerrahmen verbundenen vertikalen Schiene 114 gelagert, zwischen der und dem zugehörigen Rahmenseitenteil 22 die Kettenzahnräder 100 und 102 angeordnet sind.

Um einen Gewichtsausgleich für die Trägeranordnung zu schaffen und damit den Antriebsmotor 92 zu entlasten wird die Trägeranordnung 18 jeweils mittels einer in den Stützsäulen 20 angeordneten Gasfeder 116 abgestützt. Diese Gasfeder 116 dient gleichzeitig zur Abfederung der Trägeranordnung, falls aus irgendeinem Grunde die Höhenverstellung einmal versagen und die Trägeranordnung 18 dadurch nach unten fallen sollte.

Wie man erkennt, bildet die gesamte Trägeranordnung einschließlich der Bühne und aller bewegten Teile der verschiedenen Antriebe eine abgeschlossene Einheit, zu der auch der in der Fig. 1 noch erkennbare Schaltschrank 118 gehört. Es versteht sich, daß beim vorstehend beschriebenen Ausführungsbeispiel der Kettenantrieb für die Höhenverstellung der Trägeranordnung und die Federelemente 116 auf beiden Seiten der Durchreichöffnung vorgesehen sind, während auf der einen Seite der Trägeranordnung gemäß der Darstellung in Fig. 2 der Motor 74 für die Verschiebung der Bühne 26 und auf der anderen Seite der Durchreiche der Motor 50 für den Bandantrieb in spiegelbildlichen Positionen angeordnet sind. Die Führung der Bühne 26 an der Trägeranordnung 18, der Kettenantrieb zu ihrer Verschiebung und der Bandantrieb sind im übrigen auf beiden Seiten der Durchreichöffnung identisch ausgebildet.

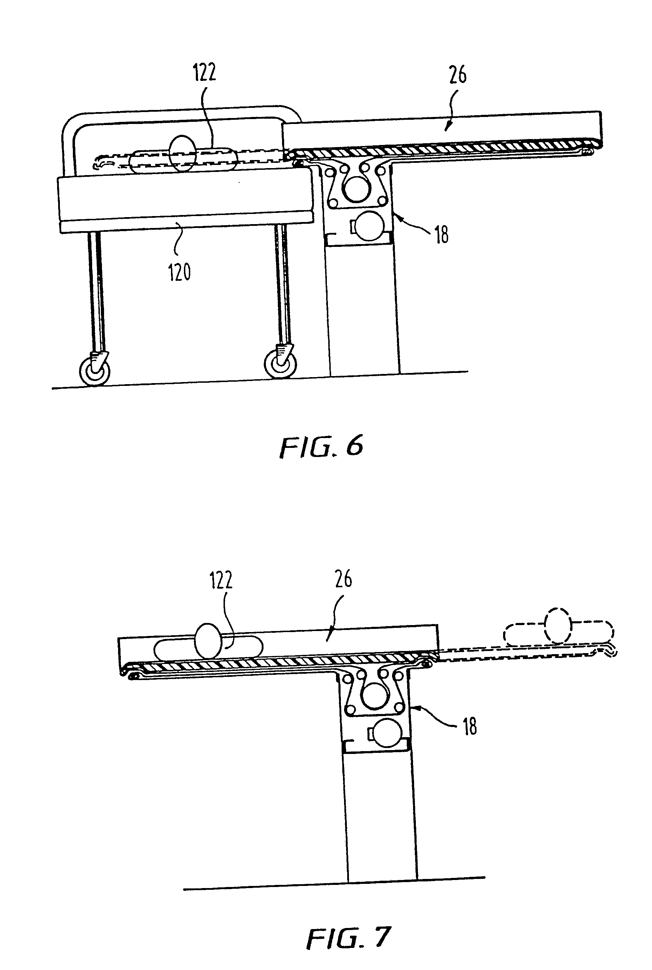

Anhand der Fig. 6 bis 9 sollen nun die verschiedenen Betriebszustände der vorstehend erläuterten Vorrichtung bei der Verlagerung eines Patienten beschrieben werden.

In Fig. 6 erkennt man ein Bett 120 mit einem schematisch dargestellten Patienten 122, wobei sich die Bühne 26 zunächst im wesentlichen in dem Raum 14 befindet. Zur Aufnahme des Patienten 122 wird die Bühne 26 mit der Auflageplatte 30 unter den Patienten 122 geschoben, wie dies durch gestrichelte Linien in Fig. 6 angedeutet ist. Wenn die Auflageplatte 30 dabei mit der Geschwindigkeit $v_p$ verschoben wird, so beträgt die Umfangsgeschwindigkeit $v_A$ der Antriebswalze $2v_p$, wobei das Obertrum 38 des Transportbandes 36 ortsfest bleibt, das heißt, sich in Richtung des Doppelpfeiles P nicht bewegt. Dabei wird der Patient durch das Transportband 36 auf die Auflageplatte 30 hinaufgezogen, so daß er die in der Fig. 7 durch ausgezogene Linien dargestellte Lage einnimmt.

Anschließend wird nun die Bühne 26 aus der in der Fig. 7 durch ausgezogene Linien dargestellten linken Stellung in den Raum 14 in die durch gestrichelte Linien wiedergegebene Stellung verschoben. Bei einer Verschiebegeschwindigkeit $v_p$ der Bühne 26 und einer stillstehenden Antriebswalze 44 (Umfangsgeschwindigkeit $v_A$ = 0) ergibt sich eine Relativgeschwindigkeit des Obertrums 38 des Transportbandes 36 relativ zum Raum von $2v_p$, während die Relativgeschwindigkeit des Obertrums 38 relativ zur Auflageplatte 30 gleich $v_p$ ist. Dies bewirkt, daß nicht nur die Bühne 26 von links nach rechts, sondern auch der Patient 122 von der linken Seite der Auflageplatte 30 zu deren rechter Seite transportiert wird, wie man dies in Fig. 7 erkennen kann.

Aus der in der Fig. 8 durch ausgezogene Linien wiedergegebenen Stellung wird die Bühne 26 nun mit den gleichen Geschwindigkeitsdaten wie bei dem in Fig. 6 dargestellten Schritt nach links in die durch gestrichelte Linien wiedergegebene Stellung verschoben, wobei der Patient 122 auf einer fahrbaren Liege 124 abgelegt wird.

Fig. 9 zeigt, daß durch das Abklappen der Umlenkleisten 58 des unteren Bandes 60 dieses von der Auflageplatte 30 bzw. dem oberen Transportband 36 weggeklappt werden kann, so daß alle Bandabschnitte des oberen und unteren Bandes 36 bzw. 60 durch Wischen gereinigt und desinfiziert werden können. Aus der in der Fig. 9 dargestellten Stellung kann die Bühne 26 nach links verfahren werden, wobei dann die linke Umlenkleiste 58 nach unten abgeklappt und dort der Reinigungs- und Desinfizierungsvorgang wiederholt werden kann.

Gemäß den Fig. 1 und 5 besteht die Auflageplatte 30 aus einem umlaufenden Metallrahmen 54, einem von diesem eingeschlossenen Schaumstoffkern 126 und diesen nach oben hin und unten hin abdeckenden Abdeckplatten 128 bzw. 130. An der Unterseite der oberen Abdeckplatte 128 ist eine Heizfolie 132 angeklebt, die in den Fig. 1 und 5 gestrichelt angedeutet ist. Sie wird über ein in einer der Wangen 28 angeordnetes Spiralkabel 134 (Fig. 1 und 2) mit Energie versorgt, wobei die Heizspannung weniger als 220 Volt, vorzugsweise 60 Volt oder 24 Volt beträgt. Diese Heizspannung kann über einen Transformator galvanisch vom Leitungsnetz getrennt geliefert werden. Die Heizleistung sollte ca. 0,5 bis 1,5 Watt pro $dm^2$ betragen. Auf diese Weise ist es möglich, die Oberfläche der Auflageplatte 30 auf eine Temperatur zu erwärmen, die der Körpertemperatur eines zu verlagernden Patienten angepaßt ist. Bei der Wahl der vorstehend genannten elektrischen Daten kann auf eine thermostatische Heizregelung verzichtet werden.

In Fig. 5 erkennt man noch ein weiteres Merkmal der vorliegenden Erfindung. Im vorderen oberen Bereich der Umlenkleisten 58 und im vorderen unteren Bereich der parallel zu den Umlenkleisten verlaufenden Ränder der Auflageplatte 30 sind Kontaktleisten 136 und 138 angeordnet, die in nicht dargestellter Weise mit dem Antriebsmotor 50 des Bandantriebes derart verbunden sind, daß sie bei Beaufschlagung mit einem einen bestimmten Schwellenwert überschreitenden Druck eine Abschaltung des Bandantriebes veranlassen. Dadurch wird eine Sicherheit gegen das Einziehen von Bettlaken, Kleidungsstücken der Patienten und dergleichen zwischen die Auflageplatte 30 und die Umlenkleisten 58 geschaffen.

Die Erfindung wurde vorstehend anhand einer stationären Verlagerungsvorrichtung beschrieben. Es versteht sich, daß die erfindungsgemäße Ausbildung der Verlagerungsvorrichtung auch bei mobilen Verlagerungsvorrichtungen vorgesehen sein kann, die beispielsweise dazu dienen, Patienten aus ihrem Bett aufzunehmen, in einen anderen Raum zu verfahren und dort wieder auf eine Unterlage abzulegen.

**Patentansprüche**

1. Vorrichtung zum Verlagern von Gegenständen oder Personen, umfassend eine Stützanordnung (20), und eine an dieser gelagerte, mittels eines Verschiebeantriebes (74 bis 88) horizontal verschiebbare Bühne (26) mit einer rechteckigen Auflageplatte (30), um die ein parallel zur Verschieberichtung der Bühne (26) bewegbares, mittels eines Bandantriebs (44) antreibbares endloses oberes Transportband (36) geführt ist, und mit einer Bandführung für ein parallel zum Transportband (36) gerichtetes endliches unteres Band (60), das mit beiden Enden (68, 70) an der Stützanordnung (18, 20) befestigt und im Bereich der senkrecht zur Verschieberichtung der Bühne (26) gerichteten freien Bühnenränder jeweils über ein parallel zu diesen gerichtetes und mit der Auflageplatte (30)-verbundenes Umlenkelement (58) geführt ist, wobei das Transportband (36) mit seinem Untertrum (40) eine in der Stützanordnung (18, 20) gelagerte Antriebswalze (44) des Bandantriebs auf einem Teil ihres Umfanges umschlingt und wobei das Obertrum des unteren Bandes (60) mittels Umlenkrollen (72) unterhalb der Antriebswalze (44) durch die Stützanordnung (18, 20) hindurchgeführt ist, dadurch *gekennzeichnet,* daß die Bühne (26) mittels eines von den Bändern (36, 60) unabhängigen Verschiebeantriebes (74 bis 88) verstellbar ist und daß die als Umlenkleisten (58) ausgebildeten Umlenkelemente jeweils in eine Vertiefung (56) an der Unterseite der Auflageplatte (30) eintauchen.

2. Vorrichtung nach Anspruch 1, dadurch *gekennzeichnet,* daß die Umlenkleisten (58) an ihren Enden mit senkrecht zu ihrer Längsrichtung gerichteten Schwenkarmen (62) verbunden sind, die jeweils um eine parallel zur Leistenlängsrichtung gerichtete Achse (64, 66) an der Auflageplatte (30) angelenkt sind.

3. Vorrichtung nach Anspruch 1 oder 2, dadurch *gekennzeichnet,* daß die Auflageplatte (30) mit einem umlaufenden Metallrahmen (54) eingefaßt ist.

4. Vorrichtung nach den Ansprüchen 1 oder 2, dadurch *gekennzeichnet,* daß in den quer zur Verschieberichtung der Bühne (26) gerichteten, die Umlenkkanten des oberen Transportbandes (36) bildenden Längsprofilendes Metallrahmens (54) jeweils die Vertiefung (56) zur Aufnahme der Umlenkleisten (58) ausgeformt ist.

5. Vorrichtung nach einem der Ansprüche 1 bis 4, wobei die Stützanordnung (20) mindestens eine vertikale Stützsäule und eine an dieser höhenverstellbar gelagerte Trägeranordnung (18) umfaßt, an der die Bühne (26) horizontal verschiebbar gelagert ist, dadurch *gekennzeichnet,* daß die beweglichen Teile (74, 76, 78, 80, 84, 86, 90) des Verschiebeantriebes für die Bühne (26) und die beweglichen Teile (92, 94, 96, 100, 102) des Höhenverstellantriebes für die Trägeranordnung (18) zusammen mit dem Bandantrieb (50, 48, 44, 42) an der Trägeranordnung (18) befestigt sind

6. Vorrichtung nach Anspruch 5, dadurch *gekennzeichnet,* daß die Trägeranordnung (18) mit ihren Enden an zwei Stützsäulen (20) geführt ist, daß ein an der Trägeranordnung (18) befestigter Höhenverstellmotor (92) über einen Ketten-, Riemen- oder Zahnradtrieb (94) eine in der Trägeranordnung (18) gelagerte Welle (96) antreibt, an deren beiden Enden Kettenräder (100) befestigt sind, welche jeweils in eine Kette (104) eingreifen, die in vertikaler Richtung an der jeweiligen Stützsäule (20) gespannt ist und mittels an der Trägeranordnung (18) gelagerter Kettenräder (102) in Formschluß mit den auf der Welle (96) sitzenden Kettenrädern (100) gehalten ist.

7. Vorrichtung nach Anspruch 5 oder 6, dadurch *gekennzeichnet,* daß zwischen den Stützsäulen (20) und der Trägeranordnung (18) jeweils vertikal gerichtete Federelemente (116) derart angeordnet sind, daß sie zumindest einen teilweisen Gewichtsausgleich der Trägeranordnung (18) bewirken.

8. Vorrichtung nach einem der Ansprüche 1 bis 7, dadurch *gekennzeichnet,* daß in der Auflageplatte (30) eine Heizvorrichtung (132) angeordnet ist.

9. Vorrichtung nach Anspruch 8, dadurch *gekennzeichnet,* daß die Heizeinrichtung (132) als Flächenheizung direkt an der Unterseite der oberen Begrenzungsplatte (128) der Auflageplatte (30) angeordnet ist und daß der Zwischenraum zwischen der Heizeinrichtung (132) und der unteren Begrenzungsplatte (130) der Auflageplatte (30) mit Kunststoff ausgeschäumt ist.

10. Vorrichtung nach Anspruch 8 oder 9, dadurch *gekennzeichnet,* daß eine vom Leitungsnetz galvanisch getrennte Spannungsquelle zur Erzeugung einer Heizspannung von weniger als 220 Volt, vorzugsweise 60 Volt oder 24 Volt vorgesehen ist.

11. Vorrichtung nach einem der Ansprüche 8 bis 10, dadurch *gekennzeichnet,* daß die Heizleistung der Heizvorrichtung etwa 0,5 bis 1,5 Watt pro $dm^2$ beträgt.

12. Vorrichtung nach einem der Ansprüche 8 bis 11, dadurch *gekennzeichnet,* daß die Heizeinrichtung (132) mittels eines in den Lagerwangen (24) angeordneten Spiralkabels (134) mit der Spannungsquelle verbunden ist.

13. Vorrichtung nach einem der Ansprüche 1 bis 12, dadurch *gekennzeichnet,* daß im vorderen oberen Bereich der Umlenkleisten (58) und/ oder im unteren Bereich der Umlenkkanten der Auflageplatte (30) auf Druck ansprechende Kontaktelemente (136, 138) angeordnet sind, die mit dem Bandantrieb (50) derart verbunden sind, daß sie bei Einwirkung eines einen bestimmten Schwellenwert überschreitenden Druckes ein Abschalten des Bandantriebes (50) bewirken.

14. Vorrichtung nach Anspruch 13, dadurch *gekennzeichnet,* daß die Kontaktelemente als sich über die Aufnahmebreite der Aufnahmeplatte (30) erstreckende Kontaktleisten (136, 138) ausgebildet sind.

**Claims**

1. Apparatus for moving objects or persons, comprising a support arrangement (20), and, mounted on the latter, a platform (26) that is horizontally displaceable by means of a displacement drive (74 to 88) and has a rectangular support plate (30) around which is guided a continuous upper conveyor belt (36) that is movable parallel to the direction of displacement of the platform (26) and can be driven by means of a belt drive (44), and having a belt guide for a continuous lower belt (60), parallel to the conveyor belt (36), that, at both ends (68, 70), is secured to the support arrangement (18, 20) and in the region of the free edges of the platform perpendicular to the direction of displacement of the platform (26) is guided by way of deflection elements (58) that are parallel to the platform edges and are connected to the support plate (30), the lower section (40) of the conveyor belt (36) passing round part of the periphery of a drive roller (44) of the belt drive mounted in the support arrangement (18, 20) and the upper section of the lower belt (60) being taken through the support arrangement (18, 20) by means of deflection rollers (72) underneath the drive roller (44), characterised in that the platform (26) is adjustable by means of a displacement drive (74 to 88) that is independent of the belts (36, 60) and that each of the deflection elements, which are in the form of deflection rails (58), dips into a depression (56) in the underside of the support plate (30) .

2. Apparatus according to claim 1, characterised in that the deflection rails are connected at their ends to pivot arms (62) perpendicular to the longitudinal direction of the rails, each pivot arm being coupled to the support plate (30) about an axis (64, 66) that is parallel to the longitudinal direction of the rails.

3. Apparatus according to claim 1 or 2, characterised in that the support plate (30) is bordered by a circumferential metal frame (54).

4. Apparatus according to claims 1 and 3, characterised in that a depression (56) for accommodating a deflection rail (58) is formed in each of the longitudinal profiles of the metal frame (54), which are transverse to the direction of displacement of the platform (26) and form the deflection edges for the upper conveyor belt (36).

5. Apparatus according to any one of claims 1 to 4, wherein the support arrangement (20) comprises at least one vertical support column and a carrier arrangement (18) mounted on the latter in such a manner as to be adjustable in height, on which carrier arrangement the platform (26) can be displaced horizontally, characterised in that the movable components (74, 76, 78, 80, 84, 86, 90) of the displacement drive for the platform (26) and the movable components (92, 94, 96, 100, 102) of the height-adjustment drive for the carrier arrangement (18) are secured together with the belt drive (50, 48, 44, 42) to the carrier arrangement (18).

6. Apparatus according to claim 5, characterised in that the carrier arrangement (18) is guided with its two ends on two support columns (20), that a height-adjustment motor (92) secured to the carrier arrangement (18) drives by way of a chain, belt or gearwheel drive (94) a shaft (96) mounted in the carrier arrangement (18), to the two ends of which shaft chain wheels (100) are secured, each of which engages a chain (104) that is tensioned in a vertical direction on the particular support column (20) and is held, by means of chain wheels (102) mounted on the carrier arrangement (18), in positive connection with the chain wheels (100) seated on the shaft (96).

7. Apparatus according to claim 5 or 6, characterised in that vertical spring elements (116) are arranged between the support columns (20) and the carrier arrangement (18) in such a manner that they at least partially counterbalance the weight of the carrier arrangement (18).

8. Apparatus according to any one of claims 1 to 7, characterised in that a heating apparatus (132) is arranged in the support plate (30).

9. Apparatus according to claim 8, characterised in that the heating device (132) in the form of surface heating is arranged directly on the underside of the upper boundary plate (128) of the support plate (30) and that the space between the heating device (132) and the lower boundary plate (130) of the support plate (30) is filled with plastics foam.

10. Apparatus according to claim 8 or 9, characterised in that a voltage source, electrically isolated from the supply network, is provided for producing a heating voltage of less than 220 volts, preferably 60 volts or 24 volts.

11. Apparatus according to any one of claims 8 to 10, characterised in that the heating capacity of the heating apparatus is approximately from 0.5 to 1.5 watts per $dm^2$.

12. Apparatus according to any one of claims 8 to 11, characterised in that the heating device (132) is connected to the voltage source by way of a helix cable (134) arranged in the carrier side pieces (24).

13. Apparatus according to any one of claims 1 to 12, characterised in that in the front upper region of the deflection rails (58) and/or in the lower region of the deflection edges of the support plate (30) are arranged contact elements (136, 138) that respond to pressure and that are connected to the belt drive (50) in such a manner that under the action of a pressure that exceeds a specific threshold value they cause the belt drive (50) to be switched off.

14. Apparatus according to claim 13, characterised in that the contact elements are in the form of contact strips (136, 138) extending over the accommodating width of the accommodation plate (30). -

## Revendications

1. Dispositif pour déplacer des objets ou des personnes, comprenant un agencement porteur (20) et une plate-forme (26) portée et guidée par celui-ci, pouvant être déplacée horizontalement au moyen d'un mécanisme de déplacement (74 à 88), ayant une plaque rectangulaire de soutien (30) autour de laquelle est guidée une bande transporteuse supérieure (36) sans fin, mobile parallèlement à la direction de déplacement de la plate-forme (26), pouvant être entraînée au moyen d'un dispositif d'entraînement de bande (44), avec un guide de bande pour une bande inférieure (60) sans fin qui est dirigée parallèlement à la bande transporteuse (36) et qui est fixée par ses deux extrémités (68,70) à l'agencement de porteur (18, 20) et guidée dans la région de chacun des bords libres de la plate-forme dirigés orthogonalement à la direction de déplacement de la plateforme (26) autour d'un élément de renvoi (58) dirigé parallèlement à ces bords et relié à la plaque de soutien (30), dans lequel la bande transporteuse (36) entoure sur une partie de sa périphérie par son brin inférieur (40) un rouleau d'entraînement (44) du mécanisme d'entraînement de bande monté dans l'agencement porteur (18, 20) et le brin supérieur de la bande inférieure (60) est guidé à travers l'agencement porteur (18, 20) en-dessous du rouleau d'entraînement (44) au moyen de poulies de renvoi (72), caractérisé en ce que la plate-forme (26) est déplaçable au moyen d'un mécanisme de déplacement (74 à 88) indépendamment des bandes (36, 60), et en ce que les éléments de renvoi constitués par des barres de renvoi (58) sont logés chacun dans une zone creuse (56) de la face inférieure de la plaque de soutien (30)

2. Dispositif selon la revendication 1, caractérisé en ce que les barres de renvoi (58) sont réunies à leurs extrémités à des bras de pivotement (62) disposés perpendiculairement à la direction longitudinale desdites barres et qui sont articulés chacun sur la plaque de soutien (30) autour d'un axe (64, 66) placé parallèlement à la direction longitudinale de ces barres.

3. Dispositif selon la revendication 1 ou 2, caractérisé en ce que la plaque de soutien (30) est encadrée par un cadre métallique (54) qui en fait le tour.

4. Dispositif selon les revendications 1 et 3, caractérisé en ce que chaque zone creuse (56) pour le logement des barres de renvoi (58) est définie par les profilés longitudinaux du cadre métallique (54) formant les bords de renvoi de la bande transporteuse supérieure (36) dirigés transversalement à la direction de déplacement de la plateforme (26).

5. Dispositif selon l'une des revendications 1 à 4, dans lequel l'agencement porteur (20) comprend au moins une colonne porteuse verticale et un agencement porteur (18) qui y est monté déplaçable en hauteur, sur lequel la plateforme (26) est montée pour être déplaçable horizontalement, caractérisé en ce que les pièces mobiles (74, 76, 78, 80, 84, 86, 90) du mécanisme de déplacement de la plate-forme (26) et les pièces mobiles (92, 94, 96, 100, 102) du mécanisme de déplacement en hauteur de l'agencement porteur (18) sont fixés ensemble avec le mécanisme d'entraînement de bande (50, 48, 44, 42) sur l'agencement porteur (18).

6. Dispositif selon la revendication 5, caractérisé en ce que l'agencement porteur (18) est guidé par ses extrémités sur deux colonnes porteuses (20), en ce qu'un moteur de déplacement en hauteur (92) fixé à l'agencement porteur (18) entraîne, par l'intermédiaire d'une transmission à chaîne, à courroie ou à pignons dentés (94), un arbre (96) monté sur l'agencement porteur (18), aux deux extrémités duquel sont fixés des pignons dentés (100) qui engrènent chacun avec une chaîne (104) qui est tendue en direction verticale sur la colonne porteuse (20) correspondante tenue en concordance de forme avec les pignons (100) placés sur l'arbre (96) au moyen de pignons dentés (102) montés sur l'agencement porteur (18).

7. Dispositif selon la revendication 5 ou 6, caractérisé en ce que des éléments élastiques (116) dirigés chacun verticalement sont disposés entre les colonnes porteuses (20) et l'agencement porteur (18) de telle façon qu'ils établissent un équilibrage de poids au moins partiel vis-à-vis de l'agencement porteur (18).

8. Dispositif selon l'une des revendications 1 à 7, caractérisé en ce qu'un dispositif de chauffage (132) est placé dans la plaque d'appui (30).

9. Dispositif selon la revendication 8, caractérisé en ce que le dispositif de chauffage (132) est disposé comme dispositif plat de chauffage, directement à la face inférieure de la plaque supérieure (128) limitant la plaque de soutien (30), et en ce que l'intervalle entre le dispositif de chauffage (132) et la plaque inférieure (130) limitant la plaque de soutien (30) est rempli de mousse plastique.

10. Dispositif selon la revendication 8 ou 9, caractérisé en ce qu'une source de tension séparée électriquement du réseau d'énergie électrique est prévue pour fournir une tension de chauffage inférieure à 220 Volts, de préférence de 60 Volts ou 24 Volts.

11. Dispositif selon l'une des revendications 8 à 10, caractérisé en ce que la puissance de chauffage du dispositif de chauffage est d'environ 0,5 à 1,5 Watt par décimètre carré.

EP 0 187 908 B1

12. Dispositif selon l'une des revendications 8 à 11, caractérisé en ce que le dispositif de chauffage (132) est relié à la source de tension au moyen d'un câble (134) enroulé hélicoïdalement sur lui-même et disposé dans les supports (24).

13. Dispositif selon l'une des revendications 1 à 12, caractérisé en ce que des éléments de contact (136, 138) sensibles à la pression sont disposés dans la zone supérieure antérieure des barres de renvoi (58) et/ou dans la zone inférieure des bords de renvoi de la plaque de soutien (30), et sont raccordés au mécanisme d'entraînement de bande (50) de telle façon qu'ils provoquent, sous l'action d'une pression dépassant une valeur de seuil déterminée, un arrêt du mécanisme d'entraînement de bande (50).

14. Dispositif selon la revendication 13, caractérisé en ce que les éléments de contact sont constitués par des barres de contact (136, 138) s'étendant sur la largeur de soutien de la plaque de soutien (30).

FIG. 1

FIG. 2

FIG. 3

FIG. 5

FIG. 4

FIG. 6

FIG. 7

FIG. 8

FIG. 9